# EUROPÄISCHE PATENTSCHRIFT

(11) **EP 0 939 258 B1**
(45) Veröffentlichungstag und Bekanntmachung des Hinweises auf die Patenterteilung: **24.07.2002**
(21) Anmeldenummer: 99102979.4
(22) Anmeldetag: 15.02.1999
(51) Int. Cl.: F16K 27/00, F15B 13/00, F16B 5/06

(54) **Wegeventil**
Directional control valve
Soupape distributrice

(30) Priorität: 26.02.1998 DE 19808007
(43) Veröffentlichungstag der Anmeldung: 01.09.1999
(73) Patentinhaber: ROBERT BOSCH GMBH, 70442 Stuttgart (DE)
(72) Erfinder: Jungeilges, Rainer, 74232 Abstatt (DE)
(74) Vertreter: Maiwald Patentanwalts GmbH

(56) Entgegenhaltungen:
- DE-A- 2 238 182
- DE-A- 2 456 351
- DE-C- 3 834 815
- DE-U- 9 318 653
- FR-A- 2 122 225
- FR-A- 2 446 939
- US-A- 4 069 999
- US-A- 4 622 123
- US-A- 4 703 921

## Beschreibung

### Stand der Technik

Die Erfindung geht aus von einem Wegeventil entsprechend der Gattung des Anspruchs 1. Derartige Wegeventile sind in einer Vielzahl von Bauvarianten bekannt (siehe z.B. DE-A-2238182, DE-C-3834815) und werden in der Pneumatik zur Steuerung von Zylindern und anderen Motoren eingesetzt. Hierzu sind die Wegeventile mit ihren die Anschlüsse aufweisenden Gehäuseflächen an einem mit entsprechenden Steuerleitungen und Anschlüssen versehenen Träger befestigt. Meist werden hierzu Schraubverbindungen eingesetzt. Deren Aufnahmebohrungen können in seitlichen Laschen am Gehäuse der Wegeventile ausgebildet sein oder können das Gehäuse durchdringen. Nachteilig ist, daß durchgehende Aufnahmebohrungen das Bauvolumen eines Wegeventils vergrößern bzw. daß die Befestigungsschrauben oftmals aufgrund von Einrichtungen am Wegeventil nur schwer zugänglich sind. Eine Schraubenmontage kann dadurch zu Beschädigungen an den Einrichtungen führen und ist automatisch nur schwer durchführbar.

### Vorteile der Erfindung

Demgegenüber weist ein Wegeventil mit den kennzeichnenden Merkmalen des Anspruchs 1 den Vorteil auf, daß seine Befestigungseinrichtung platzsparend und kostengünstig baut und eine automatische Schraubenmontage ermöglicht. Beschädigungen an den Wegeventilen können dadurch weitgehend vermieden werden. Weitere Vorteile oder vorteilhafte Weiterbildungen ergeben sich aus den Unteransprüchen und der Beschreibung.

### Zeichnung

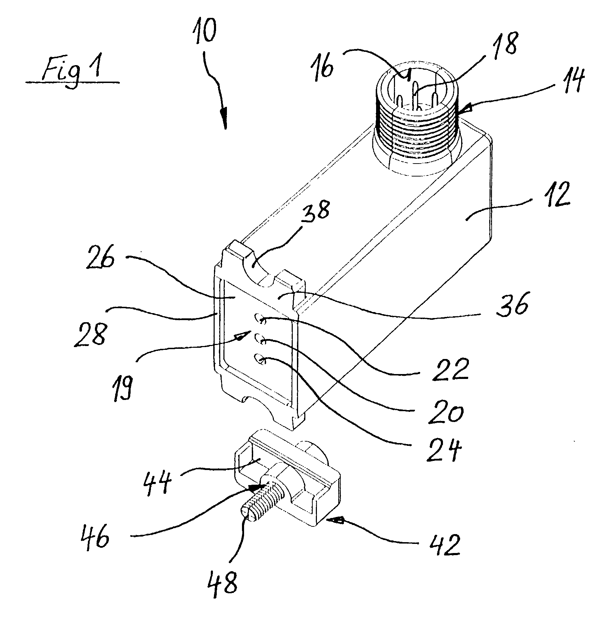

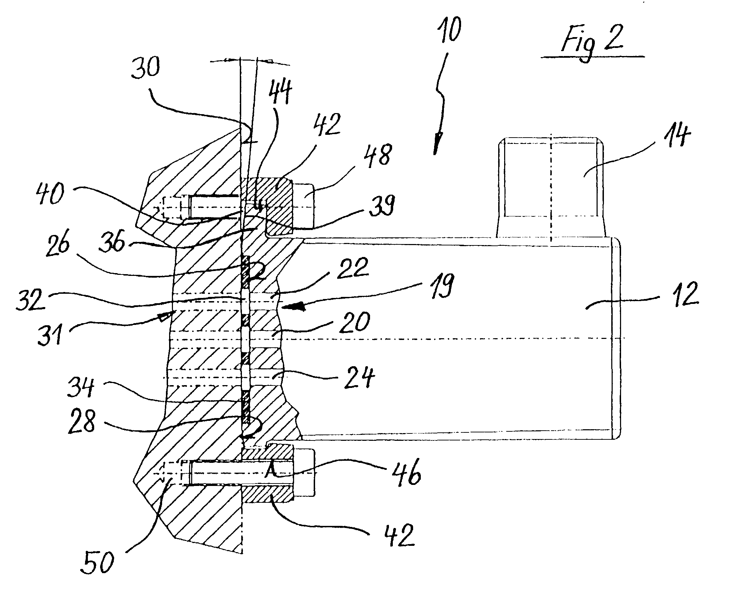

Ein Ausführungsbeispiel der Erfindung ist in der Zeichnung dargestellt und in der nachfolgenden Beschreibung näher erläutert. In Figur 1 sind ein Wegeventil und die Einzelteile zu seiner Befestigung perspektivisch dargestellt, Figur 2 zeigt ein Wegeventil im angebauten Zustand, teilweise im Längsschnitt.

### Beschreibung des Ausführungsbeispiels

Das Wegeventil 10 nach Figur 1 weist beispielhaft ein kubisch geformtes Gehäuse 12 auf. Dieses Gehäuse 12 ist am Ende einer seiner Außenflächen mit einem Anschlußstutzen 14 zur elektrischen Kontaktierung des Wegeventils 10 versehen. Der Anschlußstutzen 14 hat eine kreisförmige Außenkontur, an der zur Fixierung eines nicht gezeichneten Gegensteckers ein Außengewinde ausgebildet ist. In einer konzentrischen Ausnehmung 16 des Anschlußstutzens 14 sind Kontaktstifte 18 angeordnet, die mit einer im Inneren des Gehäuses 12 angeordneten, nicht erkennbaren Magnetspule verbunden sind. Die Magnetspule wirkt mit einem ebenfalls nicht erkennbaren beweglich geführten Schieber zusammen, der auf an sich bekannte Art und Weise einen Druckmittelfluß durch das Wegeventil 10 steuert.

Das Wegeventil 10 ist mit Anschlüssen 19, nämlich einem Zulaufanschluß 20, einem Rücklaufanschluß 22 und einem Motoranschluß 24 ausgestattet, die an dem dem Anschlußstutzen 14 gegenüberliegenden Ende des Gehäuses 12 angeordnet sind. Die Anschlüsse 19 münden an einer Dichtfläche 26, die parallel zu der entsprechenden Stirnfläche 28 des Wegeventils 10 verläuft, aber gegenüber dieser Sirnfläche 28 zurückgesetzt ist. Die Stirnfläche 28 umrahmt die Dichtfläche 26 allseitig. Im angebauten Zustand des Wegeventils 10 an einer ebenen Anbaufläche 30 (Figur 2) ergibt sich somit zwischen der Dichtfläche 26 und dieser Anbaufläche 30 ein Zwischenraum 32. Dieser Zwischenraum 32 dient der Aufnahme einer Dichtplatte 34, die die Anschlüsse 19 gegeneinander bzw. nach außen abdichtet.

Die Stirnfläche 28 ist über den Umfang des Wegeventils 10 hinaus durch zwei einander gegenüberliegende Flansche 36 erweitert, wobei einer dieser Flansche 36 fluchtend zum Anschlußstutzen 14 liegt. Die Flansche 36 sind an ihrer Längsseite mit jeweils einer nach außen offenen, halbkreisförmigen Aussparung 38 (Figur 1) versehen. Des weiteren weist die Stirnfläche 28 des Gehäuses 12 im Bereich der Flansche 36 gegenüber der Anbaufläche 30 eine Abschrägung 39 auf, durch die im angebauten Zustand des Wegeventils 10 zwischen der Stirnfläche 28 und der Anbaufläche 30 ein keilförmiger, nach außen geöffneter Spalt 40 entsteht.

Eine Fixierung und Zentrierung des Wegeventils 10 an der Anbaufläche 30 erfolgt gemäß Figur 2 mittels Pratzen 42, die mit jeweils einem der Flansche 36 in Wirkverbindung stehen. Wie Figur 1 zeigt, handelt es sich bei den Pratzen 42 um Bauelemente, die auf ihrer der Anbaufläche 30 zugewandten Seite eine nach zwei Außenseiten hin offene Ausformung 44 haben. Die Pratzen 42 sind so an der Anbaufläche 30 montiert, daß eine der offenen Außenseiten der Ausformung 44 dem Gehäuse 12 des Wegeventils 10 und die andere offene Außenseite der Anbaufläche 30 zugewandt sind. Die an der Anbaufläche 30 montierten Pratzen 42 bilden somit eine schlitzförmige Aufnahme aus, in die das Wegeventil 10 mit einer seiner Flansche 36 formschlüssig eingeschoben werden kann. Zur Befestigung der Pratzen 42 an der Anbaufläche 30 sind diese mit einer Durchgangsbohrung 46 zur Aufnahme einer Schraube 48 versehen. Im montierten Zustand liegt der Kopf der Schraube 48 auf der von der Anbaufläche 30 abgewandten Seite der Pratze 42 auf, während ihr Schaft die Pratze 42 durchdringt und mit einer zugeordneten Gewindebohrung 50 der Anbaufläche 30 verschraubt ist.

Eine Fixierung des Wegeventils 10 an der Anbaufläche 30 erfolgt, indem zunächst die erste Pratze 42 separat, d.h. losgelöst vom Wegeventil 10, mittels der Schraube 48 an der Anbaufläche 30 befestigt wird. In diesem Stadium der Montage ist die Schraube 48 noch ungehindert zugänglich, so daß diese Verschraubung automatisch durchführbar ist. Danach wird das Wegeventil 10 mit seinem dieser ersten Pratze 42 zugeordneten und mit dem Anschlußstutzen 14 fluchtenden ersten Flansch 36 unter einem Winkel, der in etwa dem des keilförmigen Spalts 40 entspricht, in die Ausformung 44 dieser ersten Pratze 42 eingeführt. In einer anschließenden Schwenkbewegung wird nun das Wegeventil 10 mit seinen Stirnflächen 28 parallel zur Anbaufläche 30 ausgerichtet und damit die erste Pratze 42 mit dem Flansch 36 verspannt. Anschließend wird das Wegeventil 10 mittels seines zweiten Flansches 36 und einer zweiten Pratze 42 ortsfest an der Anbaufläche 30 verankert. Da die Verschraubung dieser zweiten Pratze 42 ebenfalls ungehindert zugänglich ist, ist auch hierfür eine automatische Schraubstation einsetzbar. Eine Demontage des Wegeventils 10, beispielsweise im Servicefall, erfolgt in entsprechend umgekehrter Reihenfolge der Montageschritte.

Selbstverständlich sind Änderungen und Ergänzungen am beschriebenen Ausführungsbeispiel möglich, ohne vom Grundgedanken der Erfindung abzuweichen. Diesbezüglich ist anzumerken, daß die Erfindung nicht, wie beschrieben, auf 3/2-Wegeventile und nicht auf elektrisch betätigte Wegeventile eingeschränkt ist. Als Druckmittel ist Druckluft oder Hydraulikflüssigkeit vorstellbar.

## Patentansprüche

1. Wegeventil (10) mit einer von außen ansteuerbaren Stelleinrichtung zur Steuerung eines Druckmittelstroms von bzw. zu Anschlüssen (19) und mit einer Einrichtung (36, 42) zur Verankerung des Wegeventils (10) an einer Anbaufläche (30), **dadurch gekennzeichnet, daß** die Einrichtung (36, 42) wenigstens zwei nach außen abstehende Flansche (36) und wenigstens zwei an der Anbaufläche (30) verankerbare Pratze (42) umfaßt, wobei, in verankerter Lage, die Flansche (36) jeweils wenigstens eine Pratze (42) formschlüssig hintergreifen.

2. Wegeventil nach Anspruch 1, **dadurch gekennzeichnet, daß** wenigstens einer der Flansche (36) eine Abschrägung (39) zur Einführung in die zugeordnete Pratze (42) auf weist.

3. Wegeventil nach einem der Ansprüche 1 oder 2, **dadurch gekennzeichnet, daß** die Pratzen (42) wenigstens eine Durchgangsbohrung (46) für ein Befestigungsmittel (48) aufweisen.

4. Wegeventil nach Anspruch 3, **dadurch gekennzeichnet, daß** das Befestigungsmittel (48) eine Schraube ist.

5. Wegeventil nach einem der Ansprüche 1 bis 4, **dadurch gekennzeichnet, daß** die Anschlüsse (19) an einer gemeinsamen Dichtfläche (26) münden, die von einer Stirnfläche (28) rahmenförmig umschlossen ist.

6. Wegeventil nach Anspruch 5, **dadurch gekennzeichnet, daß** zur Abdichtung der Anschlüsse (19) gegeneinander bzw nach außen ein Dichtkörper (34) vorgesehen ist, der an seinem Außenumfang von der Stirnfläche (28) abgedeckt ist.

7. Wegeventil nach einem der Ansprüche 1 bis 6, **dadurch gekennzeichnet, daß** die Stelleinrichtung elektrisch ansteuerbar ist.

8. Wegeventil nach einem der Ansprüche 1 bis 7, **dadurch gekennzeichnet, daß** das Wegeventil (10) ein pneumatisches Wegeventil in 3/2-Bauweise ist.

9. Verfahren zur Befestigung eines Wegeventils (10) nach einem der Ansprüche 1 bis 8 an einer Anbaufläche (30), **dadurch gekennzeichnet, daß** in einem ersten Verfahrensschritt eine erste Pratze (42) mittels eines Befestigungsmittels (48) an der Anbaufläche (30) verankert wird, daß das Wegeventil (10) in einem zweiten Verfahrensschritt unter einem Winkel mit einem seiner Flansche (36) hinter die erste Pratze (32) eingeschoben wird, und daß in einem nächsten Verfahrensschritt wenigstens eine zweite Pratze (42), die den zweiten Flansch (36) aufnimmt, an der Anbaufläche (30) befestigt wird.

## Claims

1. Directional control valve (10) with an externally activatable actuating device for controlling a flow of pressure medium to and from ports (19) and with a device (36, 42) for anchoring the directional control valve (10) on a mounting surface (30), **characterized in that** the device (36, 42) comprises at least two outward-projecting flanges (36) and at least two brackets, which can be anchored on the mounting surface (30), the flanges (36) each engaging behind at least one bracket (42) in a form-locking manner in the anchored position.

2. Directional control valve according to Claim 1, **characterized in that** at least one of the flanges (36) has a bevel (39) for insertion into the associated bracket (42).

3. Directional control valve according to either of Claims 1 and 2, **characterized in that** the brackets (42) have at least one through-hole (46) for a fastening means (48).

4. Directional control valve according to Claim 3, **characterized in that** the fastening means (48) is a screw.

5. Directional control valve according to one of Claims 1 to 4, **characterized in that** the ports (19) open into a common sealing surface (26), which is surrounded in the form of a frame by an end face (28).

6. Directional control valve according to Claim 5, **characterized in that** a sealing body (34), which is covered by the end face (28) at its outer periphery, is provided for sealing the ports (19) relative to one another and with respect to the outside.

7. Directional control valve according to one of Claims 1 to 6, **characterized in that** the actuating device is electrically activatable.

8. Directional control valve according to one of Claims 1 to 7, **characterized in that** the directional control valve (10) is a pneumatic directional control valve of 3/2-way design.

9. Method for fastening a directional control valve (10) according to one of Claims 1 to 8 on a mounting surface (30), **characterized in that** a first bracket (42) is anchored on the mounting surface (30) by means of a fastening means (48) in a first method step, **in that** the directional control valve (10) is inserted at an angle behind the first bracket (32) by means of one of its flanges (36) in a second method step, and **in that** at least one second bracket (42), which accommodates the second flange (36), is fastened to the mounting surface (30) in a following method step.

## Revendications

1. Distributeur à tiroir (10) comportant une installation d'actionnement commandée de l'extérieur pour commander un fluide sous pression sortant ou arrivant dans les branchements (18) et une installation (36, 42) pour accrocher le distributeur à tiroir (10) sur une surface de montage (30),
**caractérisé en ce que**
l'installation (36, 42) comporte au moins deux brides (36) en saillie vers l'extérieur, et au moins deux griffes (42) susceptibles de s'accrocher à la surface de montage (30), et en position accrochée, chaque bride (36) vient prendre par une liaison de forme, chaque fois derrière au moins une griffe (42).

2. Distributeur à tiroir selon la revendication 1,
**caractérisé en ce qu'**
au moins l'une des brides (36) comporte une rampe (39) pour s'introduire dans la griffe correspondante (42).

3. Distributeur à tiroir selon l'une quelconque des revendications 1 ou 2,
**caractérisé en ce que**
les griffes (42) comportent au moins un perçage traversant (46) pour un moyen de fixation (48).

4. Distributeur à tiroir selon la revendication 3,
**caractérisé en ce que**
le moyen de fixation (48) est une vis.

5. Distributeur à tiroir selon l'une quelconque des revendications 1 à 4,
**caractérisé en ce que**
les branchements (19) arrivent dans une surface d'étanchéité (26) commune entourée par une surface frontale (28) en forme de cadre.

6. Distributeur à tiroir selon la revendication 5,
**caractérisé en ce que**
pour assurer l'étanchéité des branchements (39) les uns par rapport aux autres ou par rapport à l'extérieur, il est prévu un organe d'étanchéité (34) dont la périphérie extérieure est recouverte par la surface frontale (28).

7. Distributeur à tiroir selon l'une quelconque des revendications 1 à 6,
**caractérisé en ce que**
l'installation d'actionnement est à commande électrique.

8. Distributeur à tiroir selon l'une quelconque des revendications 1 à 7,
**caractérisé en ce qu'**
il (10) est un distributeur à tiroir pneumatique à 3/2 voies.

9. Procédé de fixation d'un distributeur à tiroir (10) selon l'une quelconque des revendications 1 à 8 sur une surface de montage (30),
**caractérisé en ce que**
dans une première étape, on accroche une première griffe (42) à l'aide d'un moyen de fixation (48) sur une surface de montage (30),
dans une seconde étape, on glisse le distributeur à tiroir (10) en lui appliquant un angle, avec sa bride (36) derrière la première griffe (32), et
dans une étape suivante, on fixe au moins une seconde griffe (42) qui reçoit la seconde bride (36) sur la surface de montage (30).
